(19) **Europäisches Patentamt**
**European Patent Office**
**Office européen des brevets**

(11) Veröffentlichungsnummer : **0 037 575**
**B1**

(12) **EUROPÄISCHE PATENTSCHRIFT**

(45) Veröffentlichungstag der Patentschrift :
29.02.84

(51) Int. Cl.³ : **H 04 B   9/00**

(21) Anmeldenummer : **81102583.2**

(22) Anmeldetag : **06.04.81**

(54) **Schaltungsanordnung mit einer Laserdiode zur Übertragung von Nachrichtensignalen über einen Lichtwellenleiter.**

(30) Priorität : **08.04.80 DE 3013533**

(43) Veröffentlichungstag der Anmeldung :
**14.10.81 Patentblatt 81/41**

(45) Bekanntmachung des Hinweises auf die Patenterteilung : **29.02.84 Patentblatt 84/09**

(84) Benannte Vertragsstaaten :
**AT BE CH FR GB IT LI NL SE**

(56) Entgegenhaltungen :
**EP-A- 0 004 815**
**DE-A- 2 436 239**
**GB-A-   657 028**
**WIRELESS WORLD, December 1976, London, M. RAMSEY et al. "Optical fibre communication - 2", Seiten 67-70**
**Telcom report 1, 1978, Heft 1, Seiten 34-39**

(73) Patentinhaber : **SIEMENS AKTIENGESELLSCHAFT Berlin und München Wittelsbacherplatz 2 D-8000 München 2 (DE)**

(72) Erfinder : **Tilly, Bodo, Ing. grad. Friedenheimer Strasse 141 D-8000 München 21 (DE)**

EP 0 037 575 B1

# Schaltungsanordnung mit einer Laserdiode zur Übertragung von Nachrichtensignalen über einen Lichtwellenleiter

Die Erfindung bezieht sich auf eine Schaltungsanordnung mit einer Laserdiode zur Übertragung von Nachrichtensignalen über eine einen Lichtwellenleiter enthaltende Übertragungsstrecke, wobei eine Sendeeinrichtung mit einem die Laserdiode enthaltenden Modulator und eine Empfangseinrichtung vorgesehen sind und wobei die optische Ausgangsleistung der Laserdiode mittels einer Regeleinrichtung steuerbar ist.

Eine Schaltungsanordnung zur Übertragung von Nachrichtensignalen über einen Lichtwellenleiter ist beispielsweise aus « Nachrichtenübertragung mit Lichtwellenleiter », telcom report, 1 (1978), Heft 1, Seiten 34 bis 39 bekannt. In dieser Veröffentlichung ist auch bereits die Problematik angeschnitten, die bei der Verwendung von Laserdioden als Lichtquellen bezüglich deren Lebensdauer entstehen kann.

Bei der bekannten Schaltungsanordnung wird ein Nachrichtensignal als moldulierendes Signal einem elektrischoptischen Wandler zugeführt, der eine Laserdiode sein kann. Das vom elektrisch-optischen Wandler bzw. von der Lichtquelle abgestrahlte Licht wird über den Lichtwellenleiter zu einem in der Empfangseinrichtung enthaltenen Lichtempfänger übertragen.

Aus der DE-A1-2 436 239 ist bereits ein Nachrichten-Fernübertragungssystem mit optischen Fasern bekannt, bei dem im Zuge eines Lichtwellenleiters Verstärker angeordnet sind. Jeder Verstärker enthält einen optisch-elektrischen Wandler, einen elektrischen Verstärker und als elektrisch-optischen Wandler eine Elektrolumineszenzdiode. Bei einer Ausführungsform des Nachrichten-Fernübertragungssystems ist zur Kompensation von Verzerrungen, die durch die Nichtlinearität der Übertragungskennlinie der Elektrolumineszenzdiode bedingt ist, zwischen dem Ausgang des elektrisch-optischen Wandlers eines Endempfängers und dem Eingang des optisch-elektrischen Wandlers eines Senders eine Gegenkopplungsschleife angeordnet, die aus einer optischen Faser besteht. Die Gegenkopplungsfaser erfaßt zugleich den Sender und den Endempfänger.

Ferner ist aus der EP-A2-0 004 815 eine elektrische Signalübertragungseinrichtung bekannt, die als optischen Sender eine Laserdiode und als optische Übertragungsstrecke einen Lichtwellenleiter enthält. Der Empfänger weist einen elektrischen Pegelregler auf. Bei einer Ausführungsform der Übertragungseinrichtung ist der Lichtwellenleiter mit einer Verzweigung versehen, so daß am optischen Empfänger zusätzlich zu dem als Hauptleitung dienenden Lichtwellenleiter ein weiterer als optische Hilfsleitung verwendeter Lichtwellenleiter endet. An jeden dieser beiden Lichtwellenleiter ist eine eigene Fotodiode optisch gekoppelt.

Bei diesem Nachrichtenübertragungssytem werden zum Schutz der empfängerseitigen Fotodiode vor Überlastung die optische Verbindung bei großem Nutzsignal unterbrochen und in diesem Betriebszustand nur ein Teil des Nutzsignals über die optische Hilfsleitung und die damit gekoppelte zusätzliche Fotodiode zum Empfänger geleitet.

Wenn das Signal schwächer wird, wird die optische Hauptleitung wieder durchgeschaltet. Ferner läßt sich mit Hilfe eines Steuersignals, das über einen optischen Rückkanal übertragen wird, der Eingang des Senders von einer Nutzsignalquelle auf eine Pilotsignalquelle umschalten. Zweck dieser Umschaltung ist es, den Pilot zu Zeiten, in denen kein Nutzsignal übertragen wird, innerhalb des für das Nutzsignal vorgesehenen Übertragungsbandes zu übertragen.

Die Verwendung einer Laserdiode als sendeseitige Lichtquelle hat den Vorteil, daß sie bis in den Gigahertz-Bereich hinein modulierbar ist und eine z. B. 15 bis 20 dB höhere, in den Lichtwellenleiter einkoppelbare Lichtleistung hat, als eine Lumineszenzdiode. Als nachteilig kann sich jedoch die geringere Lebensdauer der Laserdiode erweisen.

Dabei können sich insbesondere dadurch Schwierigkeiten ergeben, daß die Laserdiode einen steilen Kennlinienverlauf hat, der zudem noch von Temperatur und Alterung beeinflußt wird. Weitere Schwierigkeiten können daraus resultieren, daß ähnliche Abhängigkeiten hinsichtlich der angeregten Lasermoden bestehen, deren exakte Beherrschung Schwierigkeiten bereiten kann.

Da die Lebensdauer einer Laserdiode wesentlich von der abgegebenen Lichtmenge abhängt, ist es zweckmäßig, die Laserdiode hinsichtlich ihres Arbeitspunktes so zu regeln, daß sie gerade die erforderliche Lichtmenge an die Glasfaser abgibt.

Aus der DE-A1-27 12 293 ist es bereits bekannt, Lasersteuerschaltungen so aufzubauen, daß die optische Ausgangsenergie eines Lasers mit einer relativ langsamen Rückkopplungsschleife abgetastet wird, welche die optische Ausgangsenergie des Lasers mittelt. Eine von der optischen Ausgangsenergie abgeleitete Spannung wird dann mit einer festen Bezugsspannung verglichen, und zwar durch einen Differenzverstärker, der einen Vorstrom steuert.

Aus « Wireless World », Dez. 1976, Seiten 67 bis 70 ist ein optischer Sender mit einer Laserdiode bekannt, der eine konstante mittlere optische Ausgangsleistung abgibt. Zu diesem Zweck wird ein Teil des von der Laserdiode abgestrahlten Lichtes mit Hilfe einer Monitordiode ausgewertet. Die Monitordiode steuert zwei Regeleinrichtungen, von denen die eine zur Regelung der mittleren Sendeleistung und die andere zur Regelung des Modulationsgrades dient. Dabei werden alterungsbedingte Änderungen sowohl des Schwellenstromes als auch der Steigung der Laserkennlinie erfaßt. Erreicht der Schwellenstrom gegen Ende der Lebensdauer der Laserdiode einen vorgegebenen Grenzwert, so wird dies von einer Überwachungseinrichtung gemeldet.

Überlegungen im Rahmen der Erfindung haben ergeben, daß die Rückführung der in die Lichtleitfaser eingekoppelten Lichtmenge als Maß für den Istwert fehlerbehaftet sein kann. Diese Lichtmenge stimmt nämlich nicht unbedingt mit den angeregten Moden in der Glasfaser überein, die tatsächlich zur Ausbreitung gelangen. Es kann somit eine Abweichung des sendeseitig gemessenen Istwertes von den tatsächlichen Bedingungen auf der Empfangsseite bestehen. Kurzzeitlich kann diese Abweichung durch Einführung eines konstanten Faktors berücksichtigt werden. Langzeitliche Veränderungen im Modenspektrum der Laserdiode, die z. B. durch Temperaturänderungen oder Alterung verursacht werden, können dabei jedoch nicht erfaßt werden.

Bekannte Schaltungsanordnungen der vorstehend näher bezeichneten Art müssen daher einen Planungszuschlag für die optische Sendeleistung der Laserdiode vorsehen, der zu Lasten der Lebensdauer der Laserdiode geht. Dies gilt auch für den Fall, daß zur Regelung der optischen Ausgangsleistung das Licht Verwendung findet, das von einem rückwärtigen Spiegel bzw. Fenster der Laserdiode abgegeben wird.

Aufgabe der Erfindung ist es, die optische Sendeleistung der Laserdiode auf das für eine einwandfreie Nachrichtensignalübertragung erforderliche Maß zu reduzieren, so daß sich eine möglichst große Lebensdauer der Laserdiode ergibt.

Diese Aufgabe wird gemäß der Erfindung dadurch gelöst, daß die Übertragungsstrecke zusätzlich zum Lichtwellenleiter einen Rückkanal enthält und daß die Empfangseinrichtung mit einer Auswerteeinrichtung versehen ist, die eine für die optische Sendeleistung charakteristische Größe des empfangenen Nachrichtensignals auswertet und in Abhängigkeit von der charakteristischen Größe ein Steuersignal bildet, und daß das Steuersignal über den Rückkanal zur Sendeeinrichtung übertragbar ist und daß die optische Ausgangsleistung der Laserdiode in Abhängigkeit vom empfangenen Steuersignal steuerbar ist. Dabei wird insbesondere der Empfangspegel am Ende der Verstärker-Feldlänge als Maß für den Istwert benutzt. Die auf einen Festwert zuregelnde charakteristische Größe und/oder die Modulationsart werden zweckmäßigerweise so gewählt, daß sich der Istwert nicht durch die Modulation des vom Laser abgestrahlten Lichts bzw. durch das modulierende Signal ändert.

Die Regelung der optischen Ausgangsleistung erfolgt in an sich bekannter Weise dadurch, daß der Vorstrom der Laserdiode oder die Amplitude des modulierenden Signals bzw. modulierenden Stromes variiert wird.

Die Regelung des Vorstromes bei unverändertem modulierenden Signals ist insbesondere bei analogen Signalen oder Mehrstufensignalen als modulierendes Signal von Vorteil. Die Regelung der Amplitude des modulierenden Signals bei getrennt, insbesondere auf einen Wert etwas unter dem Schwellwertstrom geregeltem oder konstant gehaltenem Vorstrom empfiehlt sich insbesondere im Falle einer Pulsmodulation.

Durch diese Maßnahmen ergibt sich der Vorteil, daß der für die optische Sendeleistung vorgesehene Planungszuschlag die Laserdiode nicht von vornherein belastet, sondern sich nur als Regel-Reserve niederschlägt, so daß die Lebensdauer der Laserdiode wesentlich erhöht wird. Darüber hinaus ergibt sich der Vorteil, daß die tatsächlich zur Ausbreitung gelangenden Moden das Maß für den Istwert sind, so daß auch langzeitliche Veränderungen des Modenspektrums erfaßt werden. Außerdem vereinfacht der auf diese Weise erzielte konstante Empfangspegel die Pegel-Regelung erheblich.

Eine Nachrichtenübertragungseinrichtung, bei der hinsichtlich ihrer Verstärkung steuerbare Verstärker über den Rückkanal von einem nachfolgenden Verstärker aus gesteuert werden, ist an sich bekannt (GB-A-657 028).

Dabei ist nur ein Teil von pilotgeregelten Verstärkern mit einem eigenen Pilotempfänger versehen. Diese Einsparung an Pilotempfängern ist dadurch möglich, daß ein Pilotregler über einen Rückkanal die Verstärkung mehrerer vorangehender Verstärker steuert. Diese Regelung dient dazu, temperaturbedingte Änderungen der Leitungsdämpfung auszuregeln. Der Istwert, der auf einen vorgegebenen Sollwert geregelt wird, herrscht am Ausgang des letzten ebenfalls geregelten Verstärkers einer Gruppe.

Die bekannte Übertragungseinrichtung sieht vor, daß über die Übertragungsstrecke ein Nutz- und ein Pilotsignal übertragen werden und daß das Pilotsignal am Empfängerende abgezweigt und über die einzelnen Zwischenstellen, an denen es jeweils als Bezugsgröße für die Amplitudenregelung verwendet wird, zum Sender zurückgeführt wird.

Es ist bekannt, daß sich die Übertragungseigenschaften des Lichtwellenleiters nur wenig mit der Temperatur ändern, so daß Temperaturkompensationsmaßnahmen wie bei Kupferkabeln nicht angewendet werden müssen.

Bei der erfindungsgemäßen Schaltung ist der Istwert, der auf einen konstanten Wert geregelt wird, dagegen insbesondere ein Maß für den Empfangspegel am Ende der Verstärker-Feldlänge und herrscht an einem Schaltungspunkt im elektrischen Teil der Empfangseinrichtung, der diese Voraussetzung erfüllt.

Die optische Ausgangsleistung kann vorteilhaft so geregelt werden, daß sie nur durch die charakteristische Größe des empfangenen Nachrichtensignals allein bestimmt wird. In diesem Fall wird eine Fotodiode zur Auswertung des aus dem rückwärtigen Fenster der Laserdiode austretenden Lichts einschließlich von zugehörigen Mitteln zur Temperaturkompensation eingespart. Insbesondere ist die optische Ausgangsleistung durch das Steuersignal derart steuerbar, daß als charakteristische Größe des empfangenen Nachrichtensignals der Mittelwert oder der Spitzenwert der elektrischen Empfangsleistung auf einen Sollwert geregelt ist. Die elektrische Empfangsleistung dient dabei als Maß für die Leistung des empfangenen optischen Signals. Es kann jedoch gegebenenfalls abweichend davon ein eigener Indikator für das empfangene optische Signal vorgesehen sein.

Als Modulationsart, die den Mittelwert unbeeinflußt läßt, kommt insbesondere die Frequenzmodulation oder Pulsphasenmodulation in Frage. Dies gilt auch für die Verwendung des Spitzenwertes als charakteristische Größe.

In weiterer Ausgestaltung der Erfindung ist die optische Ausgangsleistung sowohl in Abhängigkeit von dem Steuersignal als auch in Abhängigkeit von dem optischen Ausgangssignal der Laserdiode steuerbar. Als Maß für das optische Ausgangssignal bzw. die optische Ausgangsenergie, die durch ein vorderes Fenster abgestrahlt wird, dient dabei vorzugsweise die durch ein rückwärtiges Fenster der Laserdiode abgegebene optische Leistung. Dabei kann ein Mischwert aus der empfangenen und der ausgesendeten optischen Leistung auf einen konstanten Wert geregelt werden.

In Weiterbildung der Erfindung wird die Schaltungsanordnung derart ausgebildet, daß die in der Empfangseinrichtung gemessene charakteristische Größe innerhalb eines begrenzten Regelbereiches auf konstanten Wert geregelt wird. Der Regelbereich kann dabei durch fest vorgegebene Grenzen bestimmt sein. Insbesondere wird der Vorstrom auf einen Wert unterhalb des Laserschwellwertstromes und/oder die Amplitude des modulierenden Stromes auf einen vorgegebenen Wert begrenzt. Dabei ist unter dem Laserschwellwertstrom der Strom zu verstehen, bei dem der Laser von dem Betrieb als Lumineszenzdiode (Lumineszenzbereich) in den Betrieb als Laserstrahler übergeht.

Als besonders zweckmäßig kann es sich dagegen erweisen, zumindest die obere Grenze des Regelbereiches von einer am Orte der Sendeeinrichtung gemessenen Größe abhängig zu machen. Diese Größe ist vorzugsweise die vom rückwärtigen Fenster der Laserdiode abgegebene optische Leistung. Die Regelung erfolgt in diesem Fall vorzugsweise derart, daß die durch das rückwärtige Fenster abgestrahlte optische Leistung einen vorgegebenen Wert nicht überschreitet.

Man kann weiterhin die optische Leistung auf einen unteren Grenzwert begrenzen, derart, daß die Laserdiode auch bei sehr kurzen Streckenlängen mit Sicherheit im Laserbereich arbeitet. Dies kann auf einfache Weise festgestellt werden, da das Verhältnis der optischen Leistung zum Strom durch die Laserdiode im Laserbereich der Kennlinie einen bestimmten Wert hat.

In weiterer Ausgestaltung der Erfindung ist die Laserdiode durch das Steuersignal im Sinne einer Abschaltung bei Unterschreitung eines vorgegebenen Wertes der charakteristischen Größe steuerbar. Auf diese Weise wird der Rückkanal in vorteilhafter Weise mit dazu herangezogen, die Bertriebssicherheit der Übertragungseinrichtung dadurch zu erhöhen, daß der Laser bei fehlerhafter Übertragungsstrecke insbesondere bei einer Unterbrechung des Lichtwellenleiters selbsttätig abgeschaltet wird.

In Weiterbildung der Erfindung läßt sich die Laserdiode dadurch selbsttätig überwachen, daß das über den Rückkanal empfangene Steuersignal und der Vorstrom durch eine Signalisierungseinrichtung derart auswertbar sind, daß das Überschreiten eines oberen Grenzwertes durch den Vorstrom und das gleichzeitige Unterschreiten eines vorgegebenen unteren Grenzwertes durch die charakteristische Größe signalisiert wird. Auf diese Weise läßt sich ein drohender Ausfall der Laserdiode bzw. Streckenausfall rechtzeitig signalisieren.

Zweckmäßigerweise ist die Regeleinrichtung wahlweise auf zwei Sollwerte einstellbar und der größere der beiden Sollwerte erst nach Prüfung der Übertragungsstrecke bei eingestelltem ersten Sollwert freigebbar. Insbesondere erfolgt das Umschalten automatisch nach Prüfung der Übertragungsstrecke.

Auf diese Weise läßt sich sicherstellen, daß die größere Sendeleistung erst dann abgestrahlt wird, wenn eine Überprüfung der Übertragungsstrecke ergeben hat, daß dies ohne weiteres zulässig ist.

Bei Verwendung einer Niederfrequenzleitung als Rückkanal ist das Steuersignal zweckmäßigerweise ein im Frequenzbereich oberhalb des Sprachbandes liegendes frequenzmoduliertes Signal. Bei einem zweiseitig gerichteten Übertragungssytem ist der Rückkanal vorzugsweise Bestandteil eines der Gegenrichtung angehörenden Nachrichtenübertragungsbandes des Übertragungssystems.

Andererseits kann das Steuersignal eine Gleich- oder Wechselspannung sein, die einem weiteren im Rückkanal übertragenen Signal überlagert ist. Bei Verwendung eines PCM-Signals als Rückkanal wird das Steuersignal zweckmäßigerweise in einem Zeitschlitz des PCM-Kanals übertragen. Auch eine Übertragung der Steuersignale über einen Fernspeisekreis kann zweckmäßig sein.

Der Rückkanal kann zusätzlich zu Zwecken der Fehlerortung, zur automatischen Netzüberwachung oder dergleichen Verwendung finden.

Die Erfindung wird anhand der in den Figuren dargestellten Ausführungsbeispiele näher erläutert.

Es zeigen

Figur 1 eine Schaltungsanordnung zur Übertragung von Nachrichtensignalen über einen Lichtwellenleiter mit einer NF-Leitung als Rückkanal,

Figur 2 eine Schaltungsanordnung zur Übertragung von Nachrichtensignalen über einen Lichtwellenleiter mit einem Rückkanal mit Pulsrahmen.

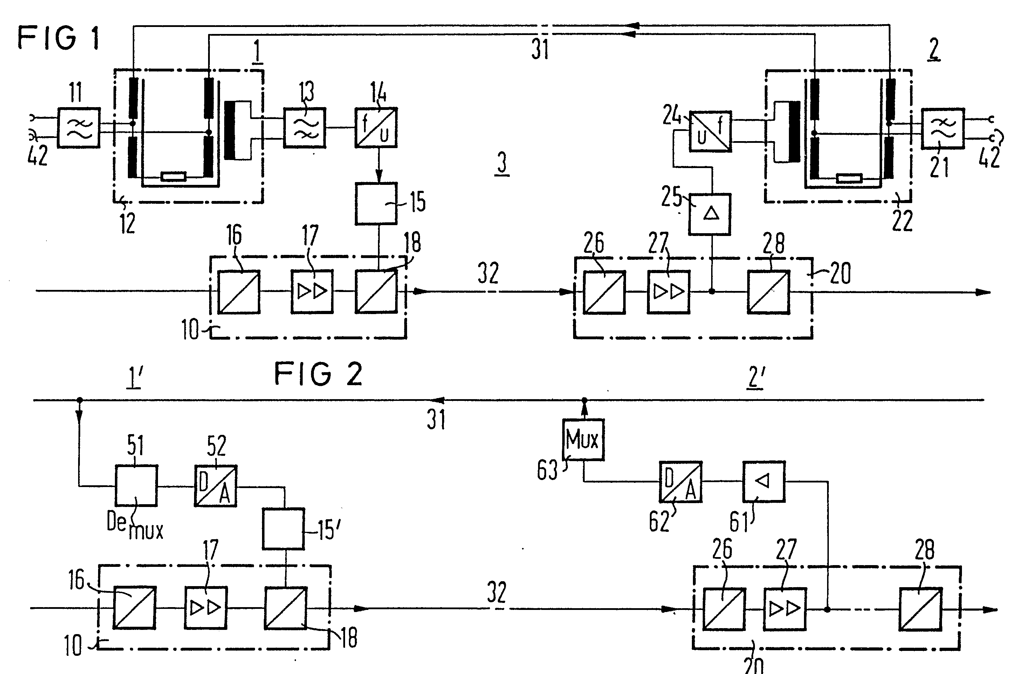

Bei der in Fig. 1 gezeigten Schaltungsanordnung ist die Sendeeinrichtung 10 mit der Empfangseinrichtung 20 über den Lichtwellenleiter 32 verbunden.

Die Sendeeinrichtung 10 enthält den optisch-elektrischen Wandler 16, den elektrischen Verstärker 17 und den elektrisch-optischen Wander 18 mit einer Laserdiode, die mit Hilfe der Regeleinrichtung 15 hinsichtlich ihres Arbeitspunktes bzw. hinsichtlich der abgestrahlten Lichtmenge geregelt wird. Die Regeleinrichtung 15 enthält einen in der Figur nicht dargestellten Sollwertgeber. Als Istwert dient eine Größe, die dem Empfangspegel der Empfangseinrichtung 20 proportional ist.

Die Empfangseinrichtung 20 stellt einen optischen Empfänger dar, der das optische Nachrichtensignal, das auf der vorangegangenen Lichtwellenleiter-Verstärker-Feldlänge eine gewisse Dämpfung erfahren hat, verstärkt und an den nächsten Übertragungsabschnitt weitergibt. An den Lichtwellenleiter 32 ist der optisch-elektrische Wandler 26 angeschlossen. Auf diesen folgen der elektrische Verstärker 27 und der elektrisch-optische Wander 28. Der Lichtempfänger ist insbesondere durch eine Siliziumfotodiode, vorzugsweise eine Lawinen- oder PIN-Fotodiode gebildet.

Die als Istwert dienende Größe ist der Nachrichtensignalpegel am Ausgang des mehrstufigen elektrischen Verstärkers 25 der Empfangseinrichtung 20, der eine fest vorgegebene bzw. konstante Verstärkung hat und unmittelbar auf den optisch-elektrischen Wandler 26 folgt.

Der Istwert wird über einen zusätzlichen Rückkanal von der Empfangseinrichtung 20 zur Sendeeinrichtung 10 übertragen. Als Rückkanal dient die NF-Leitung 31, die zugleich als Dienstleitung Verwendung findet.

Der Istwert wird im Verstärker 25 verstärkt und gleichgerichtet. Die so gewonnene Gleichspannung wird mit Hilfe des Frequenzmodulators 24 über die NF-Leitung 31 frequenzmoduliert übertragen. Das frequenzmodulierte Signal liegt im oberen Bereich des NF-Kanals oberhalb des Sprachbandes, so daß der verwendete Sprachkanal zusätzlich ein Dienstgespräch übertragen kann. Mit Hilfe des Gabelübertragers 22 sind der Frequenzmodulator 24 und der Teilnehmerapparat 42 gemeinsam an die NF-Leitung angeschlossen. Dem Teilnehmerapparat 42 ist der Tiefpaß 21 vorgeschaltet.

In der Sendeeinrichtung 1 ist die NF-Leitung 31 über den Gabelübertrager 12 sowohl an den Teilnehmerapparat 42 als auch an den Demodulator 14 geführt. Dem Teilnehmerapparat 42 ist der Tiefpaß 11 vorgeschaltet. Dem Demodulator 14 ist der Hochpaß 13 vorgeschaltet, der nur das frequenzmodulierte Signal durchläßt.

Die in Fig. 2 gezeigte Schaltungsanordnung ist hinsichtlich der Nachrichtenübertragungsstrecke wie die Schaltungsanordnung nach Fig. 1 aufgebaut. Auch die Regelung der Laserdiode erfolgt in der gleichen Weise. Abweichend von Fig. 1 dient als Rückkanal ein solcher mit Pulsrahmen.

Das Ausgangssignal des Verstärkers 27 wird über den weiteren Verstärker 61 dem Analog-Digitalwandler 62 zugeführt. Das im Analog-Digitalwandler 62 gebildete Digitalsignal wird der Multiplexeinrichtung 63 zugeführt und im Zeitschlitz für die betreffende Verstärkerfeldlänge zur Sendeeinrichtung 1' übertragen. Der Demultiplexer 51 gibt ein Digitalsignal an den Digital-Analog-Wandler 52 ab, dessen Ausgang das Steuersignal zur Regeleinrichtung 15 gelangt.

Bei einer Übertragungseinrichtung mit mehreren Verstärkerfeldern wird zweckmäßigerweise jedes Verstärkerfeld für sich empfangspegelbezogen geregelt.

**Ansprüche**

1. Schaltungsanordnung mit einer Laserdiode (18) zur Übertragung von Nachrichtensignalen über eine einen Lichtwellenleiter (32) enthaltende Übertragungsstrecke, wobei eine Sendeeinrichtung (10) mit einem die Laserdiode enthaltenden Modulator und eine Empfangseinrichtung (20) vorgesehen sind und wobei die optische Ausgangsleistung der Laserdiode (18) mittels einer Regeleinrichtung steuerbar ist, dadurch gekennzeichnet, daß die Übertragungsstrecke zusätzlich zum Lichtwellenleiter (32) einen Rückkanal (31) enthält und daß die Empfangseinrichtung (20) mit einer Auswerteeinrichtung versehen ist, die eine für die optische Sendeleistung charakteristische Größe des empfangenen Nachrichtensignals auswertet und in Abhängigkeit von der charakteristischen Größe ein Steuersignal bidet und daß das Steuersignal über den Rückkanal (31) zur Sendeeinrichtung übertragbar ist und daß die optische Ausgangsleistung der Laserdiode (18) in Abhängigkeit vom empfangenen Steuersignal steuerbar ist.

2. Schaltungsanordnung nach Anspruch 1, dadurch gekennzeichnet, daß die optische Ausgangsleistung durch das Steuersignal derart steuerbar ist, daß als charakteristische Größe des empfangenen Nachrichtensignals der Mittelwert der elektrischen Empfangsleistung auf einen Sollwert geregelt ist.

3. Schaltungsanordnung nach Anspruch 1, dadurch gekennzeichnet, daß die optische Ausgangsleistung durch das Steuersignal derart steuerbar ist, daß als charakteristische Größe des empfangenen Nachrichtensignals der Spitzenwert der elektrischen Empfangsleistung auf einen Sollwert geregelt ist.

4. Schaltungsanordnung nach Anspruch 1, dadurch gekennzeichnet, daß die optische Ausgangsleistung sowohl in Abhängigkeit von dem Steuersignal als auch in Abhängigkeit von dem optischen Ausgangssignal der Laserdiode (18) steuerbar ist.

5. Schaltungsanordnung nach Anspruch 4, dadurch gekennzeichnet, daß die in der Empfangseinrichtung (20) gemessene charakteristische Größe innerhalb eines bregrenzten Regelbereiches auf konstanten Wert geregelt wird.

6. Schaltumgsanordnung nach einem der Ansprüche 1 bis 5, dadurch gekennzeichnet, daß die Laserdiode (18) durch das Steuersignal im Sinne einer Abschaltung bei Unterschreitung eines vorgegebenen Wertes der charakteristischen. Größe steuerbar ist.

7. Schaltungsanordnung nach einem der Ansprüche 1 bis 6, dadurch gekennzeichnet, daß das über den Rückkanal (31) empfangene Steuersignal und der Vorstrom durch eine Signalisierungseinrichtung derart auswertbar sind, daß das Überschreiten eines oberen Grenzwertes durch den Vorstrom und das gleichzeitige Unterschreiten eines vorgegebenen unteren Grenzwertes durch die charakteristische Größe signalisiert wird.

8. Schaltungsanordnung nach einem der Ansprüche 1 bis 7, dadurch gekennzeichnet, daß die Regeleinrichtung wahlweise auf zwei Sollwerte einstellbar ist und daß der größere der beiden Sollwerte erst nach Prüfung der Übertragungsstrecke bei eingestelltem ersten Sollwert freigebbar ist.

9. Schaltungsanordnung nach einem der Ansprüche 1 bis 8, dadurch gekennzeichnet, daß das Steuersignal bei Verwendung einer Niederfrequenzleitung als Rückkanal (31) ein im Frequenzbereich oberhalb des Sprachbandes liegendes frequenzmoduliertes Signal ist.

10. Schaltungsanordnung nach Anspruch 1, dadurch gekennzeichnet, daß bei einem zweiseitig gerichteten Übertragungssystem der Rückkanal (31) Bestandteil eines der Gegenrichtung angehörenden Nachrichtenübertragungsbandes des Übertragungssystems ist.

## Claims

1. A circuit arrangement having a laser diode (18) for the transmission of communication signals via a transmission channel which includes a light waveguide (32), in the course of which is arranged a transmitting device (10) including a modulator and the laser diode, and a receiving device (20), the optical output power of the laser diode (18) being controllable by means of a control device, characterised in that in addition to the light waveguide (32) the transmission channel includes a return channel (31) and that the receiving device (20) is provided with an evaluating device which evaluates a magnitude of the received communication signal which is characteristic of the optical transmitting power and forms a control signal in dependence upon the characteristic magnitude, and that the control signal can be transmitted back to the transmitting device via the return channel (31), and that the optical output power of the laser diode (18) is controlled in dependence upon the received control signal.

2. A circuit arrangement as claimed in Claim 1, characterised in that the optical output power is controllable by the control signal in such manner that as a characteristic magnitude of the received communication signal, the mean value of the received electrical output is regulated to a theoretical value.

3. A circuit arrangement as claimed in Claim 1, characterised in that the optical output power is so controllable by the control signal that as a characteristic magnitude of the received communication signal, the peak value of the received electrical output is regulated to a theoretical value.

4. A circuit arrangement as claimed in Claim 1, characterised in that the optical output power is controllable both in dependence upon the control signal and in dependence upon the optical output signal of the laser diode (18).

5. A circuit arrangement as claimed in Claim 4, characterised in that the characteristic magnitude measured in the receiving device (20) is regulated within a limited regulating range of a constant value.

6. A circuit arrangement as claimed in one of Claims 1 to 5, characterised in that the laser diode (18) is controllable by the control signal to effect a disconnection if the characteristic magnitude remains under a predetermined value.

7. A circuit arrangement as claimed in one of Claims 1 to 6, characterised in that the control signal received via the return channel (31) and the preliminary current can be evaluated by a signalling device in such a manner that the exceeding of an upper limit value by the preliminary current and the simultaneous undershooting of a predetermined lower limit value by the characteristic magnitude are signalled.

8. A circuit arrangement as claimed in one of Claims 1 to 7, characterised in that the regulating device is selectively adjustable to two theoretical values and that the greater one of the two theoretical values can only be released after the testing of the transmission channel in the case of an adjusted first theoretical value.

9. A circuit arrangement as claimed in one of Claims 1 to 8, characterised in that when using a low-frequency line as a return channel (31) the control signal is a frequency-modulated signal arranged in a frequency range above the speech band.

10. A circuit arrangement as claimed in Claim 1, characterised in that in a bidirectional transmission system the return channel (31) is part of a communication transmission band of the transmission system assigned to the opposite direction.

## Revendications

1. Montage comportant une diode laser (18) pour la transmission de signaux d'informations par l'intermédiaire d'une voie de transmission contenant un guide d'ondes de lumière (32), et dans lequel il est prévu un dispositif émetteur (10) comportant un modulateur contenant la diode laser et un dispositif récepteur (20), et la puissance de sortie optique de la diode laser (18) peut être commandée au moyen d'un dispositif de régulation, caractérisé par le fait que la voie de transmission contient un canal de retour (31) en plus du guide d'ondes de lumière (32) et que le dispositif récepteur (20) est pourvu d'un dispositif d'évaluation, qui évalue une grandeur, caractéristique pour la puissance optique émise, du signal d'informations reçu et forme un signal de commande en fonction de la grandeur caractéristique, et que le signal de commande peut être transmis par l'intermédiaire du canal de retour (31) au dispositif émetteur et que la puissance optique de la diode laser (18) peut être commandée en fonction du signal de commande reçu.

2. Montage suivant la revendication 1, caractérisé par le fait que la puissance de sortie optique peut être commandée par le signal de commande de telle sorte qu'en tant que grandeur caractéristique du signal d'information reçu, la valeur moyenne de la puissance électrique reçue est réglée sur une valeur de consigne.

3. Montage suivant la revendication 1, caractérisé par le fait que la puissance de sortie optique peut être commandée par le signal de commande de telle manière qu'en tant que grandeur caractéristique du signal d'information reçu, la valeur crête de la puissance électrique reçue est réglée à une valeur de consigne.

4. Montage suivant la revendication 1, caractérisé par le fait que la puissance de sortie optique peut être commandée aussi bien en fonction du signal de commande qu'en fonction du signal de sortie optique de la diode laser (18).

5. Montage suivant la revendication 4, caractérisé par le fait que la grandeur caractéristique mesurée dans le dispositif récepteur (20) est réglée à une valeur constante à l'intérieur d'une plage limitée de réglage.

6. Montage suivant l'une des revendications 1 à 5, caractérisé par le fait que la diode laser (18) peut être commandée par le signal de commande dans le sens d'un débranchement lors du dépassement par le bas d'une valeur prédéterminée de la grandeur caractéristique.

7. Montage suivant l'une des revendications 1 à 6, caractérisé par le fait que le signal de commande reçu par l'intermédiaire du canal de retour (31) et le courant de polarisation doivent être évalués par un dispositif de signalisation de telle manière que le dépassement d'une valeur limite supérieure par le courant de polarisation et la chute simultanée de la grandeur caractéristique au-dessous d'une valeur limite inférieure prédéterminée sont signalés.

8. Montage suivant l'une des revendications 1 à 7, caractérisé par le fait que le dispositif de régulation peut être réglé au choix sur deux valeurs de consigne et que celle de ces deux valeurs de consigne, qui est supérieure, ne peut être libérée qu'après le contrôle de la voie de transmission, lorsque la première valeur de consigne est réglée.

9. Montage suivant l'une des revendications 1 à 8, caractérisé par le fait que dans le cas de l'utilisation d'une ligne à basse fréquence en tant que canal de retour (31), le signal de commande est un signal modulé en fréquence, situé dans la plage de fréquences supérieure à la bande des fréquences acoustiques.

10. Montage selon la revendication 1, caractérisé par le fait que dans le cas d'un système de transmission bidirectionnel, le canal de rétour (31) fait partie d'une bande de transmission d'informations, appartenant à la direction opposée, du système de transmission.

FIG 1

FIG 2